# EUROPEAN PATENT SPECIFICATION

(11) **EP 3 689 657 B1**
(45) Date of publication and mention of the grant of the patent: **12.04.2023**
(21) Application number: 18863007.3
(22) Date of filing: 29.09.2018
(51) Int. Cl.: B60K 6/44, B60K 6/48, B60K 6/52, B60K 6/448, B60W 20/50, B60W 50/029, B60W 50/02, B60L 3/00, B60W 50/00

(54) **HYBRID VEHICLE AND POWER SYSTEM THEREOF**
HYBRIDFAHRZEUG UND STROMVERSORGUNGSSYSTEM DAFÜR
VÉHICULE ÉLECTRIQUE HYBRIDE ET SYSTÈME ÉLECTRIQUE DE CELUI-CI

(30) Priority: 29.09.2017 CN 201710910647
(43) Date of publication of application: 05.08.2020
(73) Proprietor: BYD Company Limited, Shenzhen, Guangdong 518118 (CN)
(72) Inventor: ZHANG, Wei, Shenzhen Guangdong 518118 (CN); XU, Boliang, Shenzhen Guangdong 518118 (CN); BAI, Yunhui, Shenzhen Guangdong 518118 (CN)
(74) Representative: Hoffmann Eitle
(86) International application number: PCT/CN2018/108536
(87) International publication number: WO 2019/062878

(56) References cited:
- WO-A2-2012/089396
- CN-A- 101 370 685
- CN-A- 103 269 888
- CN-U- 201 769 767
- CN-U- 202 923 374
- CN-U- 203 211 118
- CN-U- 207 523 430
- CN-U- 207 523 446
- CN-U- 207 523 453
- US-A1- 2009 237 019
- US-A1- 2011 160 955
- US-A1- 2012 019 231
- US-A1- 2015 210 169

## Description

### FIELD

The present invention relates to the field of hybrid electric vehicle technologies, and in particular, to a power system of a hybrid electric vehicle and a hybrid electric vehicle.

### BACKGROUND

In a hybrid electric vehicle, a voltage output by a motor is rectified by an inverter for charging a power battery, and the voltage on an output end of the inverter is not controlled. However, because the output end is connected to the power battery in parallel, the power battery is equivalent to a huge capacitive load and can stabilize a voltage on a main circuit, so that an effect on a DC-DC converter of a next stage is small. In addition, a high voltage can be directly bucked to a low voltage, such as 12 V, through the DC-DC converter to supply power to low-voltage electrical appliances of the entire vehicle.

However, once the power battery is disconnected, the voltage output by the motor is uncontrollable, the voltage output by the motor needs to be stabilized for subsequent use of a load. Because voltage fluctuation on an inverter side is very large, an amplitude and a frequency of a counter electromotive force output by the motor vary with a variation of the load (that is, a variation of the rotational speed of an engine). For example, at a high rotational speed, the counter electromotive force is very high, and the voltage output through rectification and voltage stabilizing tends to be high. If a brake rectification mode is used, the output voltage is uncontrollable once the power battery is disconnected. If uncontrolled rectification is used, losses are very large.

WO 2012/089396 A2 was found to disclose matter to be of relevance to the present invention and specifically the features of the preamble of independent claim 1. The two-part form of this claim was formulated against this document. In addition to this, US 2011/160955 A1 was found to disclose a stabilization apparatus and method for stabling load voltage of a vehicle, and US 2012/019231 A1 was found to disclose a variable voltage converter with direct output voltage clamping.

### SUMMARY

An objective of the present invention is to resolve one of the technical problems in the foregoing technology at least to some extent.

Therefore, an objective of the present invention is to provide a power system of a hybrid electric vehicle. The power system can keep an input voltage of a DC-DC converter stable, and ensures normal working of the DC-DC converter.

Another objective of the present invention is to provide a hybrid electric vehicle.

To achieve the foregoing objectives, an embodiment of a first aspect of the present invention provides a power system for a hybrid electric vehicle, including: an engine, where the engine outputs power to a wheel of the hybrid electric vehicle through a clutch; a power motor, where the power motor is configured to output a driving force to a wheel of the hybrid electric vehicle, the power motor includes a power motor controller, and the power motor controller includes a first regulator; a power battery, where the power battery is configured to supply power to the power motor; a DC-DC converter; an auxiliary motor, connected to the engine, where the auxiliary motor is connected to the power motor, the DC-DC converter, and the power battery respectively, the auxiliary motor includes an auxiliary motor controller, and the auxiliary motor controller includes an inverter and a second regulator; and a voltage stabilizing circuit, where the voltage stabilizing circuit is connected between the auxiliary motor and the DC-DC converter, and the voltage stabilizing circuit performs voltage stabilizing on a direct current output by the auxiliary motor to the DC-DC converter during power generation. The second regulator is configured to control the voltage stabilizing circuit to perform voltage stabilizing when the power battery is disconnected from the DC-DC converter, and the auxiliary motor controller is valid. The first regulator is configured to control the voltage stabilizing circuit to perform voltage stabilizing when the power battery is disconnected from the DC-DC converter, and the auxiliary motor controller fails.

According to the power system of a hybrid electric vehicle provided in the embodiments of the present invention, the engine outputs power to a wheel of the hybrid electric vehicle through the clutch, the power motor outputs a driving force to a wheel of the hybrid electric vehicle, the power battery supplies power to the power motor, and the voltage stabilizing circuit performs voltage stabilizing on the direct current output by the auxiliary motor to the DC-DC converter during power generation. In addition, the second regulator controls the voltage stabilizing circuit to perform voltage stabilizing when the power battery is disconnected from the DC-DC converter, and the auxiliary motor controller is valid, and the first regulator controls the voltage stabilizing circuit to perform voltage stabilizing when the power battery is disconnected from the DC-DC converter, and the auxiliary motor controller fails. Therefore, the power system not only can maintain low-speed electric balance and low-speed smoothness of the entire vehicle and improve the performance of the entire vehicle, and but also keep the input voltage of the DC-DC converter stable when the power battery fails or both the power battery and the auxiliary motor controller fail, thereby ensuring normal working of the DC-DC converter and normal traveling of the entire vehicle.

Further, the present invention provides a hybrid electric vehicle, including the foregoing power system of a hybrid electric vehicle of the present invention.

According to the hybrid electric vehicle provided in the embodiments of the present invention, the power system of a hybrid electric vehicle not only can maintain low-speed electric balance and low-speed smoothness of the entire vehicle and improve performance of the entire vehicle, and but also can keep the input voltage of the DC-DC converter stable when the power battery fails or both the power battery and the auxiliary motor controller fail, thereby ensuring that normal working of the DC-DC converter and normal traveling of the entire vehicle.

### BRIEF DESCRIPTION OF THE DRAWINGS

The foregoing and/or additional aspects and advantages of the present invention will become apparent and comprehensible in the description made with reference to the following accompanying drawings, wherein:
Fig. 1 is a structural block diagram of a power system of a hybrid electric vehicle according to an embodiment of the present invention;
Fig. 2a is a schematic structural diagram of a power system of a hybrid electric vehicle according to an embodiment of the present invention;
Fig. 2b is a schematic structural diagram of a power system of a hybrid electric vehicle according to another embodiment of the present invention;
Fig. 2c is a schematic structural diagram of a power system of a hybrid electric vehicle according to still another embodiment of the present invention;
Fig. 3a is a structural block diagram of a voltage stabilizing circuit according to an embodiment of the present invention;
Fig. 3b is a structural block diagram of a voltage stabilizing circuit according to another embodiment of the present invention;
Fig. 4 is a schematic diagram of voltage stabilizing control according to an embodiment of the present invention;
Fig. 5 is a structural block diagram of a power system of a hybrid electric vehicle according to a specific embodiment of the present invention; and
Fig. 6 is a structural block diagram of a hybrid electric vehicle according to an embodiment of the present invention.

### DETAILED DESCRIPTION

The following describes embodiments of the present invention in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present invention and cannot be construed as a limitation to the present invention.

The following describes a power system of a hybrid electric vehicle and a hybrid electric vehicle according to the embodiments of the present invention with reference to the accompanying drawings.

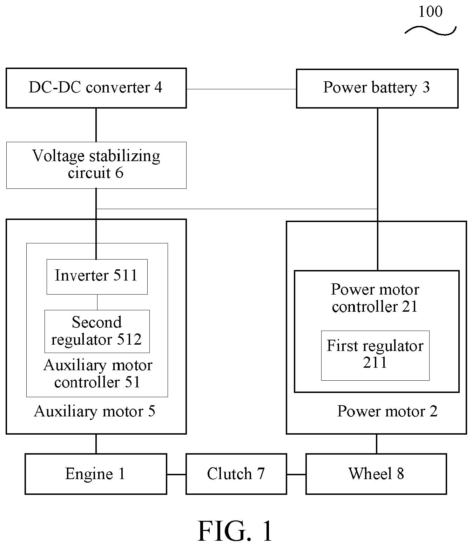

Fig. 1 is a structural block diagram of a power system of a hybrid electric vehicle according to an embodiment of the present invention. As shown in Fig. 1, the power system 100 of a hybrid electric vehicle includes: an engine 1, a power motor 2, a power battery 3, a DC-DC converter 4, an auxiliary motor 5, and a voltage stabilizing circuit 6.

With reference to Fig. 1 to Fig. 3, the engine 1 outputs power to a wheel 8 of the hybrid electric vehicle through a clutch 7. The power motor 2 is configured to output a driving force to a wheel 8 of the hybrid electric vehicle. That is, the power system of this embodiment of the present invention may provide power for normal traveling of the hybrid electric vehicle through the engine 1 and/or the power motor 2. In other words, in some embodiments of the present invention, a power source of the power system may be the engine 1 and the power motor 2, and either of the engine 1 and the power motor 2 can individually output power to the wheels 8, or the engine 1 and the power motor 2 may simultaneously output the power to the wheels 8.

The power battery 3 is configured to supply power to the power motor 2. The auxiliary motor 5 is connected to the engine 1. For example, the auxiliary motor 5 may be connected to the engine 1 through a wheel train end of the engine 1, and the auxiliary motor 5 is connected to the power motor 2, the DC-DC converter 4, and the power battery 3 respectively. The voltage stabilizing circuit 6 is connected between the auxiliary motor 5 and the DC-DC converter 4, and the voltage stabilizing circuit 6 performs voltage stabilizing on a direct current output by the auxiliary motor 5 to the DC-DC converter 4 during power generation, so that a stabilized voltage is supplied to low-voltage electrical appliances of the entire vehicle through the DC-DC converter 4. In other words, after electric energy output by the auxiliary motor 5 during power generation passes through the voltage stabilizing circuit 6, a stabilized voltage is output and supplied to the DC-DC converter 4.

Therefore, the power motor 2 and the auxiliary motor 5 may serve as a driving motor and a generator respectively, so that the auxiliary motor 5 can have a higher power-generation power and higher generation efficiency at a low speed, thereby meeting power consumption requirements of low-speed traveling, maintaining low-speed electric balance of the entire vehicle, maintaining low-speed smoothness, and improving performance of the entire vehicle. In addition, the voltage stabilizing circuit 6 performs voltage stabilizing on the direct current output by the auxiliary motor 5 to the DC-DC converter 4 during power generation, so that an input voltage of the DC-DC converter 4 is kept stable, thereby ensuring normal working of the DC-DC converter.

When the auxiliary motor 5 is driven by the engine 1 to generate power, at least one of charging the power battery 3, supplying power to the power motor 2, and supplying power to the DC-DC converter 4 may be implemented. In other words, the engine 1 may drive the auxiliary motor 5 to generate power, and electric energy generated by the auxiliary motor 5 may be supplied to at least one of the power battery 3, the power motor 2, and the DC-DC converter 4. It should be understood that, the engine 1 may drive the auxiliary motor 5 to generate power while outputting power to the wheels 8, or may solely drive the auxiliary motor 5 to generate power.

The auxiliary motor 5 may be a BSG motor. It should be noted that, the auxiliary motor 5 is a high-voltage motor. For example, a generating voltage of the auxiliary motor 5 is equivalent to a voltage of the power battery 3, so that the electric energy generated by the auxiliary motor 5 can be directly used to charge the power battery 3 without being subjected to voltage conversion, or may be directly supplied to the power motor 2 and/or the DC-DC converter 4. In addition, the auxiliary motor 5 may alternatively be a high-efficiency generator. For example, the auxiliary motor 5 is driven to generate power at an idling speed of the engine 1, thereby implementing generating efficiency of 97% or above.

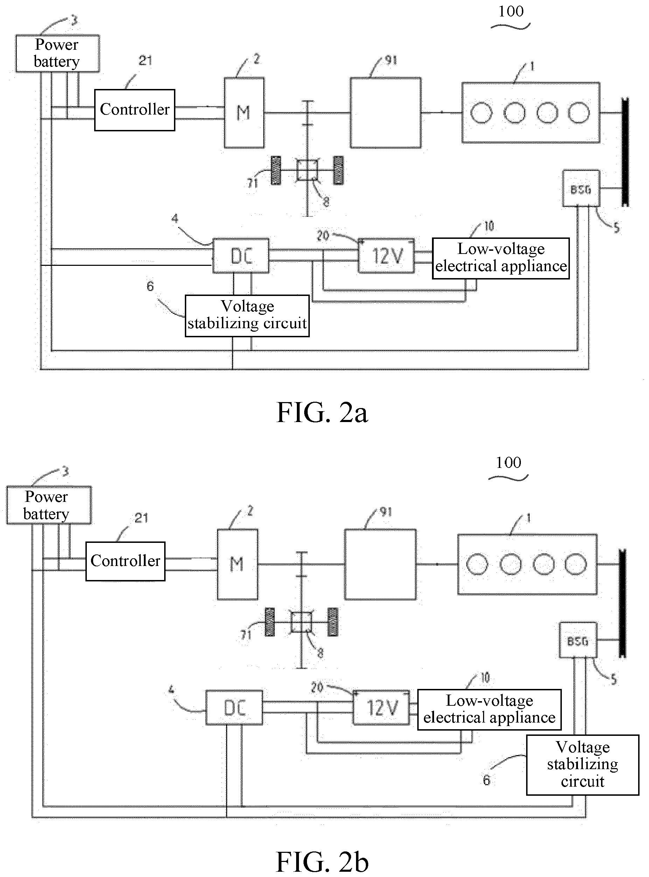

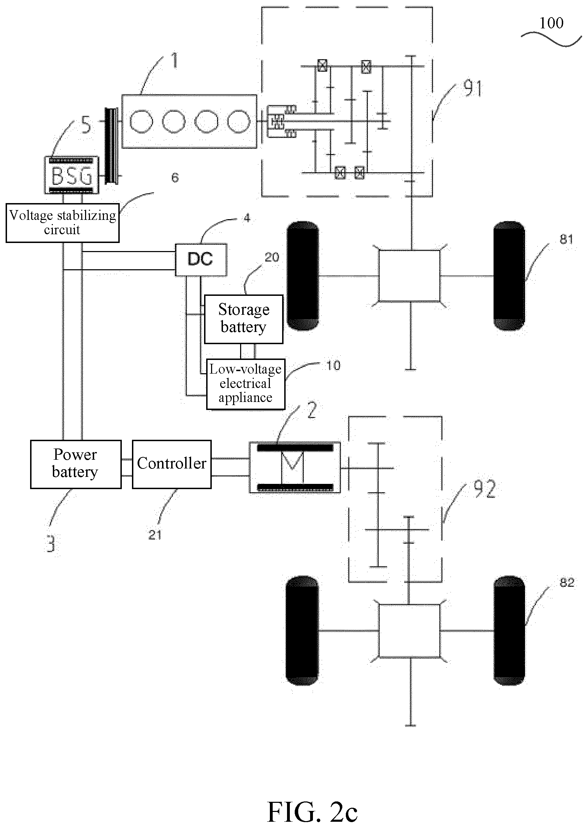

It should be noted that, the voltage stabilizing circuit 6 may be disposed on an output line of the auxiliary motor 5, and the auxiliary motor 5 is connected to the power motor 2, the power battery 3, and the DC-DC converter 4 respectively through the voltage stabilizing circuit 6. As shown in Fig. 2b and Fig. 2c, in this case, the stabilized voltage may be output through the voltage stabilizing circuit 6 when the auxiliary motor 5 generates power, thereby charging the power battery 3 at a stable voltage, supplying power to the power motor 2 at a stable voltage, and supplying power to the DC-DC converter 4 at a stable voltage. Therefore, whether the power battery 3 and the DC-DC converter 4 are connected or not, normal working of the DC-DC converter 4 can be ensured. The voltage stabilizing circuit 6 may alternatively be disposed on an incoming line of the DC-DC converter 4, and the auxiliary motor 5 may be connected to the DC-DC converter 4 and the power battery 3 respectively. At the same time, the power battery 3 may be connected to the DC-DC converter 4. Therefore, as shown in Fig. 1 and Fig. 2a, when the power battery 3 is disconnected from the DC-DC converter 4, the voltage output to the DC-DC converter 4 by the auxiliary motor 5 during power generation is still stable, thereby ensuring normal working of the DC-DC converter 4.

The auxiliary motor 5 may be configured to start the engine 1. That is, the auxiliary motor 5 may implement a function of starting the engine 1. For example, when starting the engine 1, the auxiliary motor 5 may drive a crankshaft of the engine 1 to rotate, to enable a piston of the engine 1 to reach an ignition position, thereby starting the engine 1, and therefore, the auxiliary motor 5 can implement a function of a starter in the related art.

As stated above, both the engine 1 and the power motor 2 may be configured to drive the wheels 8 of the hybrid electric vehicle. For example, as shown in Fig. 2a and Fig. 2b, the engine 1 and the power motor 2 drive a same wheel, for example, a pair of front wheels 81 (including a left front wheel and a right front wheel), of the hybrid electric vehicle together. For another example, as shown in Fig. 2c, the engine 1 may drive a first wheel, for example, a pair of front wheels 81 (including a left front wheel and a right front wheel), of the hybrid electric vehicle, and the power motor 2 may drive a second wheel, for example, a pair of rear wheels 82 (including a left rear wheel and a right rear wheel), of the hybrid electric vehicle.

When the engine 1 and the power motor 2 drive the pair of front wheels 81 together, an overall driving force of the power system is output to the pair of front wheels 81, and a two wheel drive mode may be adopted for the entire vehicle. When the engine 1 drives the pair of front wheels 81, and the power motor 2 drives the pair of rear wheels 82, the driving force of the power system is output to the pair of front wheels 81 and the pair of rear wheels 82 respectively, and a four wheel drive mode may be adopted for the entire vehicle.

In the two wheel drive mode, with reference to Fig. 2a and Fig. 2b, the power system 100 of a hybrid electric vehicle further includes a main reducer 9 and a first transmission 91, where the engine 1 outputs power to the first wheel, for example, the pair of front wheels 81, of the hybrid electric vehicle through the clutch 7, the first transmission 91, and the main reducer 9, and the power motor 2 outputs a driving force to the first wheel, for example, the pair of front wheels 81, of the hybrid electric vehicle through the main reducer 9.

In the four wheel drive mode, with reference to Fig. 2c, the power system 100 of a hybrid electric vehicle further includes a first transmission 91 and a second transmission 92, where the engine 1 outputs power to the first wheel, for example, the pair of front wheels 81, of the hybrid electric vehicle through the clutch 7 and the first transmission 91, and the power motor 2 outputs a driving force to the second wheel, for example, the pair of rear wheels 82, of the hybrid electric vehicle through the second transmission 92.

The clutch 7 and the first transmission 91 may be integrally disposed.

In this embodiment of the present invention, because the generating voltage of the auxiliary motor 5 is supplied to two ends of the power battery 3, the voltage input to the DC-DC converter 4 is stable when the power battery 3 is connected to the DC-DC converter 4. When the power battery 3 fails or is damaged, and is disconnected from the DC-DC converter 4, it is necessary to control electric energy output by the auxiliary motor 5 during power generation at this moment, that is, voltage stabilizing may be performed through the voltage stabilizing circuit 6 on the direct current output by the auxiliary motor 5 to the DC-DC converter 4 during power generation.

In this embodiment of the present invention, as shown in Fig. 1, the power motor 2 includes a power motor controller 21, and the power motor controller 21 includes a first regulator 211. The auxiliary motor 5 includes an auxiliary motor controller 51, and the auxiliary motor controller 51 includes an inverter 511 and a second regulator 512.

The second regulator 512 is configured to control the voltage stabilizing circuit 6 to perform voltage stabilizing when the power battery 3 is disconnected from the DC-DC converter 4, and the auxiliary motor controller 51 is valid. The first regulator 211 is configured to control the voltage stabilizing circuit 6 to perform voltage stabilizing when the power battery 3 is disconnected from the DC-DC converter 4, and the auxiliary motor controller 51 fails.

It should be noted that, the failure of the auxiliary motor controller 51 may indicate that the auxiliary motor controller 51 cannot perform voltage stabilizing. On the contrary, the validity of the auxiliary motor controller 51 may indicate that the auxiliary motor controller 51 can perform voltage stabilizing.

That is, when the power battery 3 is disconnected, the entire vehicle still needs to travel normally, and the auxiliary motor controller 51 performs voltage stabilizing. If the auxiliary motor controller 51 fails, the power motor controller is responsible for voltage stabilizing, so that when both the power battery 3 and the auxiliary motor controller 51 fail at the same time, the entire vehicle can still travel normally, and an electric quantity of a storage battery can be prevented from being consumed.

A voltage stabilizing procedure of this embodiment of the present invention is described in a parallel-series mode and a parallel mode respectively.

When the entire vehicle travels normally, and the hybrid electric vehicle works in the parallel-series mode, if a main contactor of a battery management system (BMS) of the power battery 3 is disconnected, indicating that the power battery 3 is disconnected, whether the auxiliary motor controller 51 fails is further determined. If the auxiliary motor controller 51 fails, the auxiliary motor controller 51 stops voltage stabilizing, and the power motor controller 21 performs voltage stabilizing. If the auxiliary motor controller 51 fails, the power motor controller 21 stops voltage stabilizing, and the auxiliary motor controller 51 performs voltage stabilizing.

When the entire vehicle travels normally, and the hybrid electric vehicle works in the parallel mode, if the main contactor of the BMS of the power battery 3 is disconnected, indicating that the power battery 3 is disconnected, whether the auxiliary motor controller 51 fails is further determined. If the auxiliary motor controller 51 fails, the auxiliary motor controller 51 stops voltage stabilizing, and the power motor controller 21 performs voltage stabilizing. If the auxiliary motor controller 51 fails, the power motor controller 21 stops voltage stabilizing, and the auxiliary motor controller 51 performs voltage stabilizing.

In addition, in some embodiments of the present invention, whether the power battery 3 is disconnected or not and whether the auxiliary motor controller 51 fails or not may be determined by an entire vehicle controller of the hybrid electric vehicle. For example, the entire vehicle controller may communicate with the power battery 3 through a CAN bus to determine whether the power battery 3 is disconnected, and the entire vehicle controller may communicate with the auxiliary motor controller 51 through the CAN bus to determine whether the auxiliary motor controller 51 fails, and sends a voltage stabilizing instruction to the auxiliary motor controller 51 when the power battery 3 is disconnected, and the auxiliary motor controller 51 is valid. The entire vehicle controller may communicate with the power motor controller 21 through the CAN bus to send a voltage stabilizing instruction to the power motor controller 21 when the power battery 3 is disconnected, and the auxiliary motor controller 51 fails. Alternatively, in some other embodiments, the entire vehicle controller may alternatively determine whether the power battery 3 is disconnected or not and whether the auxiliary motor controller 51 fails or not through communication with the power battery 3, the auxiliary motor controller 51, and the power motor controller 21. The auxiliary motor controller 51 may communicate with the power battery 3 to determine whether the power battery 3 is disconnected, and performs voltage stabilizing when the power battery 3 is disconnected, and the auxiliary motor controller 51 is valid, and the auxiliary motor controller 51 may further send a voltage stabilizing instruction to the power motor controller 21 when the auxiliary motor controller 51 fails.

According to an embodiment of the present invention, both the first regulator 211 and the second regulator 512 are configured to output a first regulating signal and a second regulating signal according to an output signal of the voltage stabilizing circuit 6, to keep a direct-current bus voltage output by the inverter 511 stable, where the first regulating signal is used for regulating a d-axis current of the auxiliary motor 5, and the second regulating signal is used for regulating a q-axis current of the auxiliary motor 5.

That is, when the first regulator 211 controls the voltage stabilizing circuit 6 to perform voltage stabilizing, the first regulator 211 outputs the first regulating signal and the second regulating signal according to the output signal of the voltage stabilizing circuit 6. When the second regulator 512 controls the voltage stabilizing circuit 6 to perform voltage stabilizing, the second regulator 512 outputs the first regulating signal and the second regulating signal according to the output signal of the voltage stabilizing circuit 6.

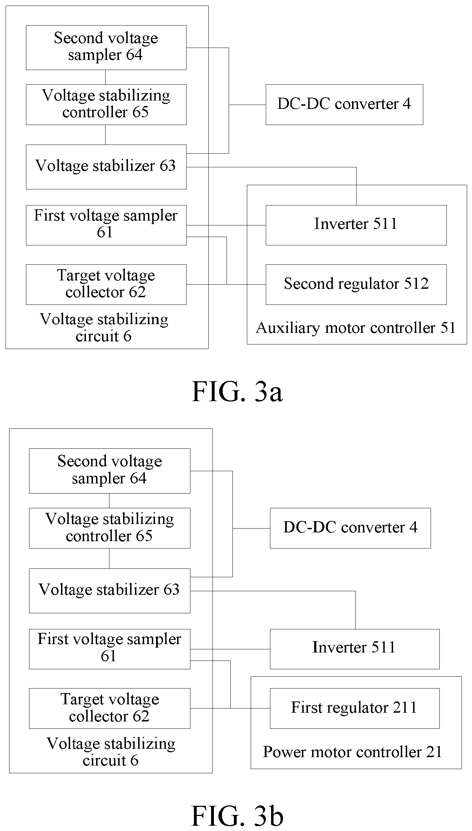

In some embodiments, as shown in Fig. 3a and Fig. 3b, the voltage stabilizing circuit 6 includes a first voltage sampler 61 and a target voltage collector 62. The first voltage sampler 61 samples the direct-current bus voltage output by the inverter 511 to obtain a first voltage sample value, and outputs the first voltage sample value to the first regulator 211 or the second regulator 512. The target voltage collector 62 obtains a target reference voltage and sends the target reference voltage to the first regulator 211 or the second regulator 512. Both the first regulator 211 and the second regulator 512 are configured to output the first regulating signal and the second regulating signal according to a voltage difference between the target reference voltage and the first voltage sample value. The output signal of the voltage stabilizing circuit 6 includes the first voltage sample value and the target reference voltage.

The auxiliary motor controller 51 is connected to the DC-DC converter 4 through the voltage stabilizing circuit 6, and the auxiliary motor controller 51 outputs the direct-current bus voltage through the inverter 511.

When the second regulator 512 controls the voltage stabilizing circuit 6 to perform voltage stabilizing, as shown in Fig. 3a, the first voltage sampler 61 samples the direct-current bus voltage output by the inverter 511 to obtain the first voltage sample value, and outputs the first voltage sample value to the second regulator 512. The target voltage collector 62 obtains the target reference voltage and sends the target reference voltage to the second regulator 512. The second regulator 512 outputs the first regulating signal and the second regulating signal according to the voltage difference between the target reference voltage and the first voltage sample value, regulates the d-axis current of the auxiliary motor 5 through the first regulating signal, and regulates the q-axis current of the auxiliary motor 5 through the second regulating signal, so that the auxiliary motor controller 51 controls the inverter 511 according to the d-axis current and the q-axis current of the auxiliary motor 5 when the power battery 3 is disconnected from the DC-DC converter 4, to keep the direct-current bus voltage output by the inverter 511 stable.

When the first regulator 211 controls the voltage stabilizing circuit 6 to perform voltage stabilizing, as shown in Fig. 3b, the first voltage sampler 61 samples the direct-current bus voltage output by the inverter 511 to obtain the first voltage sample value, and outputs the first voltage sample value to the first regulator 211. The target voltage collector 62 obtains the target reference voltage and sends the target reference voltage to the first regulator 211. The first regulator 211 outputs the first regulating signal and the second regulating signal according to the voltage difference between the target reference voltage and the first voltage sample value, regulates the d-axis current of the auxiliary motor 5 through the first regulating signal, and regulates the q-axis current of the auxiliary motor 5 through the second regulating signal, so that the power motor controller 21 controls the inverter 511 according to the d-axis current and the q-axis current of the auxiliary motor 5 when the power battery 3 is disconnected from the DC-DC converter 4, and the auxiliary motor controller 51 fails, to keep the direct-current bus voltage output by the inverter 511 stable.

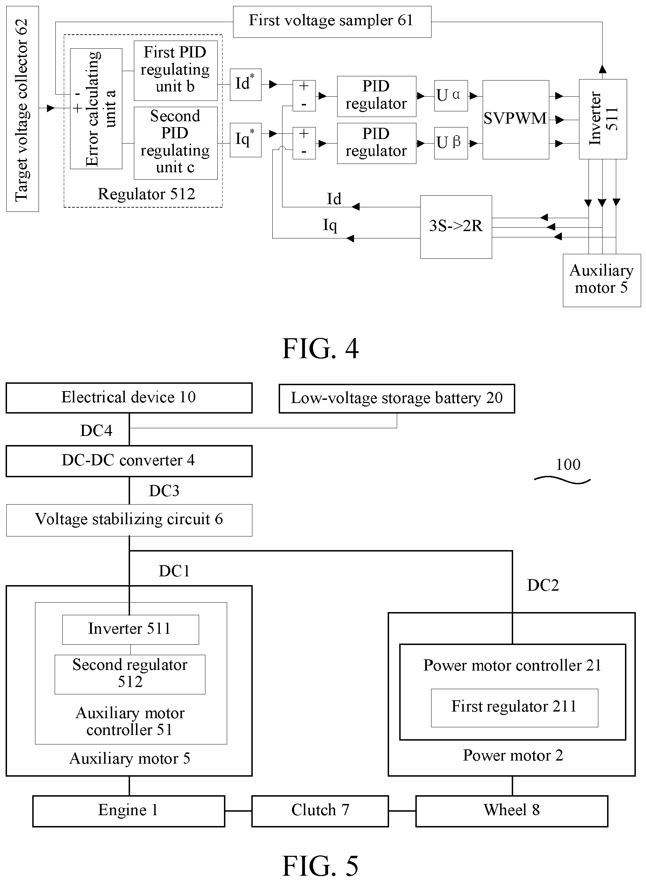

In some examples, the inverter 511 may be controlled by using pulse width modulation (PWM) to keep the direct-current bus voltage output by the inverter 511 stable. As shown in Fig. 4, both the first regulator 211 and the second regulator 512 may include an error calculating unit a, a first PID regulating unit b, and a second PID regulating unit c. That is, the first regulator 211 and the second regulator 512 may use both a same structure and a same control principle

The error calculating unit a is connected to the first voltage sampler 61 and the target voltage collector 62 respectively, and the error calculating unit a is configured to obtain the voltage difference between the target reference voltage and the first voltage sample value. The first PID regulating unit b is connected to the error calculating unit a, and the first PID regulating unit b regulates the voltage difference between the target reference voltage and the first voltage sample value to output the first regulating signal. The second PID regulating unit c is connected to the error calculating unit a, and the second PID regulating unit c regulates the voltage difference between the target reference voltage and the first voltage sample value to output the second regulating signal.

As shown in Fig. 4, the first voltage sampler 61 samples the direct-current bus voltage output by the inverter 511 to obtain the first voltage sample value in real time, and outputs the first voltage sample value to the error calculating unit a. The target voltage collector 62 obtains the target reference voltage and outputs the target reference voltage to the error calculating unit a. The error calculating unit a obtains the voltage difference between the target reference voltage and the first voltage sample value, outputs the difference to the first PID regulating unit b and the second PID regulating unit c respectively, and outputs the first regulating signal (that is, Id* in Fig. 4) through the first PID regulating unit b and outputs the second PID regulating unit (that is, Iq* in Fig. 4) through the second PID regulating unit c. In this case, a three-phase current output by the auxiliary motor 5 is converted into the d-axis current Id and the q-axis current Iq in a dq coordinate system through 3S/2R conversion, and a difference between Id* and Id and a difference between Iq* and Iq are obtained respectively, and the differences are respectively controlled through corresponding PID regulators to obtain an a shaft voltage Uα of the auxiliary motor 5 and a β shaft voltage Uβ of the auxiliary motor 5. Uα and Uβ are input to an SVPWM module to output a three-phase duty ratio, the inverter 511 is controlled by using the duty ratio, the d-axis current Id and the q-axis current Iq output by the auxiliary motor 5 are regulated through the inverter 511, the regulated d-axis current of the auxiliary motor is further regulated again through the first control signal, and the q-axis current of the auxiliary motor is regulated again through the second regulating signal. Therefore, closed-loop control of the d-axis current and the q-axis current of the auxiliary motor is formed, and the closed-loop control can keep the direct-current bus voltage output by the inverter 511 stable. That is, the direct-current voltage output by the auxiliary motor 5 to the DC-DC converter 4 during power generation is kept stable.

It should be noted that, the direct-current voltage output by the inverter 511 in the auxiliary motor controller 51 has a specific correlation with a counter electromotive force output by the auxiliary motor 5, and to ensure control efficiency, the voltage output by the inverter 511 may be set to a 3/2 phase voltage (that is, a maximum phase voltage is 2/3 of the direct-current bus voltage in a driving state). Therefore, the direct current voltage output by the inverter 511 has a specific relationship with a rotational speed of the auxiliary motor 5. When the rotational speed of the auxiliary motor 5 is higher, the direct current voltage output by the inverter 511 is higher. When the rotational speed of the auxiliary motor 5 is lower, the direct current voltage output by the inverter 511 is lower.

To ensure that the direct current voltage input to the DC-DC converter 4 falls within a preset voltage interval, in some embodiments of the present invention, as shown in Fig. 3a and Fig. 3b, the voltage stabilizing circuit 6 may further include a voltage stabilizer 63, a second voltage sampler 64, and a voltage stabilizing controller 65.

The voltage stabilizer 63 is connected to a direct-current output end of the inverter 511, the voltage stabilizer 63 performs voltage stabilizing on the direct-current bus voltage output by the inverter 511, and an output end of the voltage stabilizer 63 is connected to an input end of the DC-DC converter 4. The second voltage sampler 64 samples the output voltage of the voltage stabilizer 63 to obtain a second voltage sample value. The voltage stabilizing controller 65 is connected to the voltage stabilizer 63 and the second voltage sampler 64 respectively, and the voltage stabilizing controller 65 is configured to control the output voltage of the voltage stabilizer 63 according to a preset reference voltage and the second voltage sample value to make the output voltage of the voltage stabilizer 63 fall within the preset voltage interval.

In some examples, a switch-type regulating circuit, for example, a BOOST circuit, may be used as the voltage stabilizer 63, and not only can boost a voltage, but also has high control precision. A silicon carbide MOSFET, for example, IMW120R45M1 of Infineon, may be used as a switch device in the BOOST circuit, has a withstand voltage of 1200 V and internal resistance of 45 mΩ, has features of a high withstand voltage, small internal resistance, and good heat-conducting performance, and has a loss several tens of times less than that of a high-speed IGBT having the same specification. 1EDI60N12AF of Infineon may be used as a drive chip of the voltage stabilizer 63, and is isolated by using a coreless transformer, and control is safe and reliable. It can be understood that, the drive chip may generate a drive signal.

In some other examples, a BUCK-BOOST circuit may be used as the voltage stabilizer 63, can buck a voltage at a high speed and boost a voltage at a low speed, and has high control precision.

In still other examples, a linear voltage stabilizing circuit or a three-terminal voltage stabilizing circuit (such as LM317 and 7805) may alternatively be used as the voltage stabilizer 63.

It can be understood that, to facilitate circuit design, the first voltage sampler 61 and the second voltage sampler 64 may have a same structure. For example, both the first voltage sampler 61 and the second voltage sampler 64 may include a differential voltage circuit and have features of high precision and convenience in regulating an amplification factor.

In some examples, a PWM special modulation chip SG3525 may be used as the voltage stabilizing controller 65, and has features of a small volume, simple control, and a capability of outputting a stable PWM wave.

For example, a working procedure 100 of the power system of a hybrid electric vehicle is: The second voltage sampler 64 samples an output voltage of the voltage stabilizer 63 to obtain a second voltage sample value, and outputs the second voltage sample value to the chip SG3525. The chip SG3525 may set a reference voltage, compares the reference voltage with the second voltage sample value, may generate two paths of PWM waves by combining triangular waves generated by the chip SG3525, and controls the voltage stabilizer 63 through the two paths of PWM waves, to make a voltage output by the voltage stabilizer 63 to the DC-DC converter 4 fall within in a preset voltage interval, for example, 11 V to 13 V, thereby ensuring normal working of a low-voltage load in the hybrid electric vehicle.

It should be noted that, if the output direct-current bus voltage is excessively low, and the second voltage sample value is very small, SG3525 may emit a PWM wave with a large duty ratio for boosting the voltage.

Therefore, the auxiliary motor 5 and the DC-DC converter 4 have an independent voltage-stabilizing power supply channel. When the power battery 3 fails and is disconnected from the DC-DC converter 4, or the auxiliary motor controller 52 fails, low-voltage power consumption of the entire vehicle can be ensured through the independent voltage-stabilizing power supply channel of the auxiliary motor 5 and the DC-DC converter 4, thereby ensuring that the entire vehicle can travel in a pure fuel mode, and improving a traveling distance of the entire vehicle.

In a specific embodiment of the present invention, as shown in Fig. 5, when the power battery 3 fails and is disconnected from the DC-DC converter 4, the voltage stabilizing circuit 6 is connected to the incoming line of the DC-DC converter 4.

The power motor 2 further includes a power motor controller 21, where the auxiliary motor controller 51 is connected to the power motor controller 21, and is connected to the DC-DC converter 4 through the voltage stabilizing circuit 6. After being converted by the inverter 511, electric energy generated by the auxiliary motor 5 during power generation may be converted into a high-voltage direct current such as a 600 V high-voltage direct current, thereby supplying power to at least one of the power motor 2 and the DC-DC converter 4.

It can be understood that, the power motor controller 21 may further include a DC-AC conversion unit. The DC-AC conversion unit converts the high-voltage direct current output by the inverter 511 into an alternating current to charge the power motor 4.

As shown in Fig. 5, the inverter 511 of the auxiliary motor controller 51 includes a first direct-current end DC1, the power motor controller 21 includes a second direct-current end DC2, and the DC-DC converter 4 includes a third direct-current end DC3. The first direct-current end DC1 of the auxiliary motor controller 51 is connected to the third direct-current end DC3 of the DC-DC converter 4 through the voltage stabilizing circuit 6 to provide a stable voltage to the DC-DC converter 4, and the DC-DC converter 4 may perform DC-DC conversion on the stabilized direct current. In addition, the inverter 511 of the auxiliary motor controller 51 may further output the high-voltage direct current to the power motor controller 21 through the first direct-current end DC1 to supply power to the power motor 2.

As shown in Fig. 5, the DC-DC converter 4 is further connected to an electrical device 10 and a low-voltage storage battery 20 in the hybrid electric vehicle to supply power to the electrical device 10 and the low-voltage storage battery 20 respectively, and the low-voltage storage battery 20 is further connected to the electrical device 10.

As shown in Fig. 5, the DC-DC converter 4 further includes a fourth direct-current end DC4. The DC-DC converter 4 may convert the high-voltage direct current output by the auxiliary motor 5 through the auxiliary motor controller 51 into the low-voltage direct current, and outputs the low-voltage direct current through the fourth direct-current end DC4. The fourth direct-current end DC4 of the DC-DC converter 4 is connected to the electrical device 10 for supplying power to the electrical device 10, where the electrical device 10 may be a low-voltage power-consuming device, and includes, but is not limited to, a car light, a radio, and the like. The fourth direct-current end DC4 of the DC-DC converter 4 is alternatively connected to the low-voltage storage battery 20 for supplying power to the low-voltage storage battery 20. The low-voltage storage battery 20 is contacted to the electrical device 10 to supply power to the electrical device 10. Specifically, when the auxiliary motor 5 stops generating power, the low-voltage storage battery 20 may supply power to the electrical device 10, thereby ensuring low-voltage power consumption of the entire vehicle, ensuring that the entire vehicle can travel in a pure fuel mode, and improving a traveling distance of the entire vehicle.

It should be noted that, in the embodiments of the present invention, a low voltage may refer to a voltage of 12 V or 24 V, a high voltage may refer to a voltage of 600 V, and a preset voltage interval may refer to 11 V to 13 V or 23 V to 25 V, but this is not limited thereto.

In conclusion, according to the power system of a hybrid electric vehicle provided in the embodiments of the present invention, the engine outputs power to a wheel of the hybrid electric vehicle through the clutch, the power motor outputs a driving force to a wheel of the hybrid electric vehicle, the power battery supplies power to the power motor, and the voltage stabilizing circuit performs voltage stabilizing on the direct current output by the auxiliary motor to the DC-DC converter during power generation. In addition, the second regulator controls the voltage stabilizing circuit to perform voltage stabilizing when the power battery is disconnected from the DC-DC converter, and the auxiliary motor controller is valid, and the first regulator controls the voltage stabilizing circuit to perform voltage stabilizing when the power battery is disconnected from the DC-DC converter, and the auxiliary motor controller fails. Therefore, the power system not only can maintain low-speed electric balance and low-speed smoothness of the entire vehicle and improve the performance of the entire vehicle, and but also keep the input voltage of the DC-DC converter stable when the power battery fails or both the power battery and the auxiliary motor controller fail, thereby ensuring normal working of the DC-DC converter and normal traveling of the entire vehicle.

Further, the present invention further provides a hybrid electric vehicle.

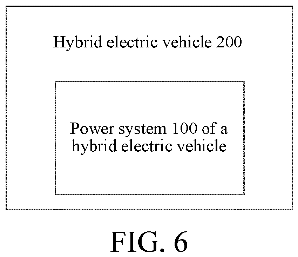

Fig. 6 is a structural block diagram of a hybrid electric vehicle according to an embodiment of the present invention. As shown in Fig. 6, the hybrid electric vehicle 200 includes the foregoing power system 100 of a hybrid electric vehicle.

According to the hybrid electric vehicle provided in the embodiments of the present invention, the power system of a hybrid electric vehicle may maintain low-speed electric balance and low-speed smoothness of the entire vehicle and improve performance of the entire vehicle, and may keep the input voltage of the DC-DC converter stable when the power battery fails or both the power battery and the auxiliary motor controller fail, thereby ensuring normal working of the DC-DC converter and normal traveling of the entire vehicle.

In the description of the present invention, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inside", "outside", "clockwise", "counterclockwise", "axial ", "radial", and "circumferential ", are based on orientation or position relationships shown in the accompanying drawings, and are intended only to conveniently describe the present invention and simplify the description, rather than indicating or implying that the mentioned apparatus or component needs to have a particular orientation or needs to be constructed and operated in a particular orientation. Therefore, such terms should not be construed as limiting of the present invention.

In addition, terms "first" and "second" are only used to describe the objective and cannot be understood as indicating or implying relative importance or implying a quantity of the indicated technical features. Therefore, features defining "first" and "second" can explicitly or implicitly include at least one of the features. In the descriptions of the present invention, unless explicitly specified, "a plurality of" means at least two, for example, two or three.

In the present invention, unless otherwise explicitly specified or defined, the terms such as "mount", "install", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediary, internal communication between two components or interaction relationship between the two components. A person of ordinary skill in the art may understand the specific meanings of the foregoing terms in the present invention according to specific situations.

In the present invention, unless otherwise explicitly specified or defined, the first feature being located "above" or "below" the second feature may be the first feature being in direct contact with the second feature, or the first feature being in indirect contact with the second feature through an intermediary. In addition, the first feature being located "above" the second feature may be the first feature being located directly above or obliquely above the second feature, or may simply indicate that the first feature is higher in level than the second feature. The first feature being located "below" the second feature may be the first feature being located directly below or obliquely below the second feature, or may simply indicate that the first feature is lower in level than the second feature.

In description of the present invention, description of reference terms such as "one embodiment", "some embodiments", "example", "specific example" or "some examples" means including specific features, structures, materials, or features described in the embodiment or example in at least one embodiment or example of the present invention. In this specification, schematic descriptions of the foregoing terms do not necessarily direct at a same embodiment or example. In addition, the described specific features, structures, materials, or features can be combined in a proper manner in any one or more embodiments or examples. In addition, in a case that is not mutually contradictory, a person skilled in the art can combine or group different embodiments or examples that are described in this specification and features of the different embodiments or examples.

Although the embodiments of the present invention are shown and described above, it can be understood that, the foregoing embodiments are exemplary, and cannot be construed as a limitation to the present invention. Within the scope of the appended claims, a person of ordinary skill in the art may make changes, modifications, replacement, and variations to the foregoing embodiments.

## Claims

1. A power system (100) of a hybrid electric vehicle, comprising:
an engine (1), wherein the engine (1) outputs power to a wheel of the hybrid electric vehicle through a clutch (7);
a power motor (2) , wherein the power motor (2) is configured to output a driving force to the wheel of the hybrid electric vehicle, the power motor (2) comprises a power motor controller (21), and the power motor controller (21) comprises a first regulator (211);
a power battery (3), wherein the power battery (3) is configured to supply power to the power motor (2);
a DC-DC converter (4); and
an auxiliary motor (5), connected to the engine (1), wherein the auxiliary motor (5) is connected to the power motor (2), the DC-DC converter (4), and the power battery (3) respectively, the auxiliary motor (5) comprises an auxiliary motor controller (51), and the auxiliary motor controller (51) comprises an inverter (511) and a second regulator (512);
**characterized by** further comprising
a voltage stabilizing circuit (6), wherein the voltage stabilizing circuit (6) is connected between the auxiliary motor (5) and the DC-DC converter (4), and the voltage stabilizing circuit (6) performs voltage stabilizing on a direct current output by the auxiliary motor (5) to the DC-DC converter (4) during power generation, wherein
the second regulator (512) is configured to control the voltage stabilizing circuit (6) to perform voltage stabilizing when the power battery (3) is disconnected from the DC-DC converter (4), and the auxiliary motor controller (51) is valid, and the first regulator (211) is configured to control the voltage stabilizing circuit (6) to perform voltage stabilizing when the power battery (3) is disconnected from the DC-DC converter (4), and the auxiliary motor controller (51) fails.

2. The power system (100) of a hybrid electric vehicle according to claim 1, wherein both the first regulator (211) and the second regulator (512) are configured to output a first regulating signal and a second regulating signal according to an output signal of the voltage stabilizing circuit (6), to keep a direct-current bus voltage output by the inverter stable, wherein the first regulating signal is used for regulating a d-axis current of the auxiliary motor (5), and the second regulating signal is used for regulating a q-axis current of the auxiliary motor (5).

3. The power system (100) of a hybrid electric vehicle according to claim 2, wherein the voltage stabilizing circuit (6) comprises a first voltage sampler (61) and a target voltage collector (62), the first voltage sampler (61) samples the direct-current bus voltage output by the inverter (511) to obtain a first voltage sample value, and outputs the first voltage sample value to the first regulator (211) or the second regulator (512), and the target voltage collector (62) obtains a target reference voltage and sends the target reference voltage to the first regulator (211) or the second regulator (512), wherein
both the first regulator (211) and the second regulator (512) are configured to output the first regulating signal and the second regulating signal according to a voltage difference between the target reference voltage and the first voltage sample value, and
an output signal of the voltage stabilizing circuit (6) comprises the first voltage sample value and the target reference voltage.

4. The power system (100) of a hybrid electric vehicle according to claim 3, wherein the voltage stabilizing circuit (6) further comprises:
a voltage stabilizer (63), wherein the voltage stabilizer (63) is connected to a direct-current output end of the inverter (511), the voltage stabilizer (63) performs voltage stabilizing on the direct-current bus voltage output by the inverter (511), and an output end of the voltage stabilizer (63) is connected to an input end of the DC-DC converter (4);
a second voltage sampler (64), wherein the second voltage sampler (64) samples an output voltage of the voltage stabilizer (63) to obtain a second voltage sample value; and
a voltage stabilizing controller (65), wherein the voltage stabilizing controller (65) is connected to the voltage stabilizer (63) and the second voltage sampler (64) respectively, and the voltage stabilizing controller (65) is configured to control the output voltage of the voltage stabilizer (63) according to a preset reference voltage and the second voltage sample value to make the output voltage of the voltage stabilizer (63) to fall within a preset voltage interval.

5. The power system (100) of a hybrid electric vehicle according to claim 3 or 4, wherein both the first regulator (211) and the second regulator (512) comprise:
an error calculating unit, wherein the error calculating unit is connected to the first voltage sampler (61) and the target voltage collector (62) respectively, and the error calculating unit is configured to obtain the voltage difference between the target reference voltage and the first voltage sample value;
a first PID regulating unit (b), wherein the first PID regulating unit (b) is connected to the error calculating unit, and the first PID regulating unit (b) regulates the voltage difference between the target reference voltage and the first voltage sample value to output the first regulating signal; and
a second PID regulating unit (c), wherein the second PID regulating unit (c) is connected to the error calculating unit, and the second PID regulating unit (c) regulates the voltage difference between the target reference voltage and the first voltage sample value to output the second regulating signal.

6. The power system (100) of a hybrid electric vehicle according to any one of claims 1 to 5, wherein the auxiliary motor (5) is a BSG motor.

7. The power system (100) of a hybrid electric vehicle according to any one of claims 1 to 6, wherein when the auxiliary motor (5) is driven by the engine (1) to generate power, the auxiliary motor (5) is configured to implement at least one of charging the power battery (3), supplying power to the power motor (2) and supplying power to the DC-DC converter (4).

8. The power system (100) of a hybrid electric vehicle according to any one of claims 1 to 7, wherein when the voltage stabilizing circuit (6) is disposed on an output line of the auxiliary motor (5), and the auxiliary motor (5) is connected to the power motor (2), the power battery (3), and the DC-DC converter (4) respectively through the voltage stabilizing circuit (6).

9. The power system (100) of a hybrid electric vehicle according to any one of claims 1 to 7, wherein the voltage stabilizing circuit (6) is disposed on an incoming line of the DC-DC converter (4), and the auxiliary motor (5) is connected to the DC-DC converter (4) and the power battery (3) respectively.

10. A hybrid electric vehicle, comprising the power system (100) of a hybrid electric vehicle according to any one of claims 1 to 9.

## Patentansprüche

1. Stromversorgungssystem (100) eines Hybridelektrofahrzeugs, umfassend:
eine Maschine (1), wobei die Maschine (1) Leistung an ein Rad des Hybridelektrofahrzeugs durch eine Kupplung (7) ausgibt;
einen Stromversorgungsmotor (2), wobei der Stromversorgungsmotor (2) dazu ausgelegt ist, eine Antriebskraft an das Rad des Hybridelektrofahrzeugs auszugeben, der Stromversorgungsmotor (2) eine Stromversorgungsmotorsteuereinheit (21) umfasst und die Stromversorgungsmotorsteuereinheit (21) einen ersten Regler (211) umfasst;
eine Stromversorgungsbatterie (3), wobei die Stromversorgungsbatterie (3) dazu ausgelegt ist, den Stromversorgungsmotor (2) mit Strom zu versorgen;
einen Gleichspannungswandler (4); und
einen Hilfsmotor (5), der mit der Maschine (1) verbunden ist, wobei der Hilfsmotor (5) jeweils mit dem Stromversorgungsmotor (2), dem Gleichspannungswandler (4) und der Stromversorgungsbatterie (3) verbunden ist, der Hilfsmotor (5) eine Hilfsmotorsteuereinheit (51) umfasst und die Hilfsmotorsteuereinheit (51) einen Wechselrichter (511) und einen zweiten Regler (512) umfasst;
**dadurch gekennzeichnet, dass** es weiter umfasst
einen Spannungsstabilisierungsschaltkreis (6), wobei der Spannungsstabilisierungsschaltkreis (6) zwischen dem Hilfsmotor (5) und dem Gleichspannungswandler (4) verbunden ist und der Spannungsstabilisierungsschaltkreis (6) Spannungsstabilisierung an einem Gleichstromausgang von dem Hilfsmotor (5) zu dem Gleichspannungswandler (4) während Stromerzeugung durchführt, wobei
der zweite Regler (512) dazu ausgelegt ist, den Spannungsstabilisierungsschaltkreis (6) zu steuern, Spannungsstabilisierung durchzuführen, wenn die Stromversorgungsbatterie (3) von dem Gleichspannungswandler (4) getrennt ist und die Hilfsmotorsteuereinheit (51) wirksam ist, und der erste Regler (211) dazu ausgelegt ist, den Spannungsstabilisierungsschaltkreis (6) zu steuern, Spannungsstabilisierung durchzuführen, wenn die Stromversorgungsbatterie (3) von dem Gleichspannungswandler (4) getrennt ist und die Hilfsmotorsteuereinheit (51) versagt.

2. Stromversorgungssystem (100) für ein Hybridelektrofahrzeug nach Anspruch 1, wobei sowohl der erste Regler (211) als auch der zweite Regler (512) dazu ausgelegt sind, ein erstes Regulierungssignal und ein zweites Regulierungssignal gemäß einem Ausgangssignal des Spannungsstabilisierungsschaltkreises (6) auszugeben, um einen Gleichstromschienenspannungsausgang durch den Wechselrichter stabil zu halten, wobei das erste Regulierungssignal verwendet wird, um eine d-Achsen-Stromstärke des Hilfsmotors (5) zu regulieren, und das zweite Regulierungssignal verwendet wird, um eine q-Achsen-Stromstärke des Hilfsmotors (5) zu regulieren.

3. Stromversorgungssystem (100) für ein Hybridelektrofahrzeug nach Anspruch 2, wobei der Spannungsstabilisierungsschaltkreis (6) einen ersten Spannungsabtaster (61) und einen Zielspannungssammler (62) umfasst, der erste Spannungsabtaster (61) den Gleichstromschienenspannungsausgang durch den Wechselrichter (511) abtastet, um einen ersten Spannungsabtastungswert zu erhalten, und den ersten Spannungsabtastungswert an den ersten Regler (211) oder den zweiten Regler (512) ausgibt, und der Zielspannungssammler (62) eine Zielreferenzspannung erhält und die Zielreferenzspannung an den ersten Regler (211) oder den zweiten Regler (512) sendet, wobei
sowohl der erste Regler (211) als auch der zweite Regler (512) dazu ausgelegt sind, das erste Regulierungssignal und das zweite Regulierungssignal gemäß einem Spannungsunterschied zwischen der Zielreferenzspannung und dem ersten Spannungsabtastungswert auszugeben, und
ein Ausgangssignal des Spannungsstabilisierungsschaltkreises (6) den ersten Spannungsabtastungswert und die Zielreferenzspannung umfasst.

4. Stromversorgungssystem (100) für ein Hybridelektrofahrzeug nach Anspruch 3, wobei der Spannungsstabilisierungsschaltkreis (6) weiter Folgendes umfasst:
einen Spannungsstabilisator (63), wobei der Spannungsstabilisator (63) mit einem Gleichstromausgangsende des Wechselrichters (511) verbunden ist, der Spannungsstabilisator (63) Spannungsstabilisierung an dem Gleichstromschienenspannungsausgang durch den Wechselrichter (511) durchführt und ein Ausgangsende des Spannungsstabilisators (63) mit einem Eingangsende des Gleichspannungswandlers (4) verbunden ist;
einen zweiten Spannungsabtaster (64), wobei der zweite Spannungsabtaster (64) eine Ausgangsspannung des Spannungsstabilisators (63) abtastet, um einen zweiten Spannungsabtastungswert zu erhalten; und
eine Spannungsstabilisierungssteuereinheit (65), wobei die Spannungsstabilisierungssteuereinheit (65) jeweils mit dem Spannungsstabilisator (63) und dem zweiten Spannungsabtaster (64) verbunden ist und die Spannungsstabilisierungssteuereinheit (65) dazu ausgelegt ist, die Ausgangsspannung des Spannungsstabilisators (63) gemäß einer voreingestellten Referenzspannung und dem zweiten Spannungsabtastungswert zu steuern, um die Ausgangsspannung des Spannungsstabilisators (63) in ein voreingestelltes Spannungsintervall fallen zu lassen.

5. Stromversorgungssystem (100) für ein Hybridelektrofahrzeug nach Anspruch 3 oder 4, wobei sowohl der erste Regler (211) als auch der zweite Regler (512) Folgendes umfassen:
eine Fehlerberechnungseinheit, wobei die Fehlerberechnungseinheit jeweils mit dem ersten Spannungsabtaster (61) und dem Zielspannungssammler (62) verbunden ist und die Fehlerberechnungseinheit dazu ausgelegt ist, den Spannungsunterschied zwischen der Zielreferenzspannung und dem ersten Spannungsabtastungswert zu erhalten;
eine erste PID-Regulierungseinheit (b), wobei die erste PID-Regulierungseinheit (b) mit der Fehlerberechnungseinheit verbunden ist und die erste PID-Regulierungseinheit (b) den Spannungsunterschied zwischen der Zielreferenzspannung und dem ersten Spannungsabtastungswert reguliert, um das erste Regulierungssignal auszugeben; und
eine zweite PID-Regulierungseinheit (c), wobei die zweite PID-Regulierungseinheit (c) mit der Fehlerberechnungseinheit verbunden ist und die zweite PID-Regulierungseinheit (c) den Spannungsunterschied zwischen der Zielreferenzspannung und dem ersten Spannungsabtastungswert reguliert, um das zweite Regulierungssignal auszugeben.

6. Stromversorgungssystem (100) für ein Hybridelektrofahrzeug nach einem der Ansprüche 1 bis 5, wobei der Hilfsmotor (5) ein BSG-Motor ist.

7. Stromversorgungssystem (100) für ein Hybridelektrofahrzeug nach einem der Ansprüche 1 bis 6, wobei, wenn der Hilfsmotor (5) von der Maschine (1) angetrieben wird, um Strom zu erzeugen, der Hilfsmotor (5) dazu ausgelegt ist, zumindest eines von Laden der Stromversorgungsbatterie (3), Versorgen des Stromversorgungsmotors (2) mit Strom und Versorgen des Gleichspannungswandlers (4) mit Strom zu implementieren.

8. Stromversorgungssystem (100) für ein Hybridelektrofahrzeug nach einem der Ansprüche 1 bis 7, wobei wenn der Spannungsstabilisierungsschaltkreis (6) auf einer Ausgangsleitung des Hilfsmotors (5) angeordnet ist und der Hilfsmotor (5) jeweils mit dem Stromversorgungsmotor (2), der Stromversorgungsbatterie (3) und der Gleichspannungswandler (4) durch den Spannungsstabilisierungsschaltkreis (6) verbunden ist.

9. Stromversorgungssystem (100) für ein Hybridelektrofahrzeug nach einem der Ansprüche 1 bis 7, wobei der Spannungsstabilisierungsschaltkreis (6) auf einer Eingangsleitung des Gleichspannungswandlers (4) angeordnet ist und der Hilfsmotor (5) jeweils mit dem Gleichspannungswandler (4) und der Stromversorgungsbatterie (3) verbunden ist.

10. Hybridelektrofahrzeug, das das Stromversorgungssystem (100) für ein Hybridelektrofahrzeug nach einem der Ansprüche 1 bis 9 umfasst.

## Revendications

1. Système d'alimentation (100) d'un véhicule hybride électrique, comprenant :
un moteur thermique (1), dans lequel le moteur thermique (1) émet de l'énergie vers une roue du véhicule hybride électrique par l'intermédiaire d'un embrayage (7) ;
un moteur électrique (2), dans lequel le moteur électrique (2) est configuré pour émettre une force motrice vers la roue du véhicule hybride électrique, le moteur électrique (2) comprend un dispositif de commande de moteur électrique (21), et le dispositif de commande de moteur électrique (21) comprend un premier régulateur (211) ;
une batterie d'alimentation (3), dans lequel la batterie d'alimentation (3) est configurée pour fournir de l'énergie au moteur électrique (2) ;
un convertisseur CC-CC (4) ; et
un moteur auxiliaire (5), relié au moteur thermique (1), dans lequel le moteur auxiliaire (5) est connecté au moteur électrique (2), au convertisseur CC-CC (4), et à la batterie d'alimentation (3) respectivement, le moteur auxiliaire (5) comprend un dispositif de commande de moteur auxiliaire (51), et le dispositif de commande de moteur auxiliaire (51) comprend un onduleur (511) et un second régulateur (512) ;
**caractérisé en ce qu'**il comprend en outre
un circuit stabilisateur de tension (6), dans lequel le circuit stabilisateur de tension (6) est connecté entre le moteur auxiliaire (5) et le convertisseur CC-CC (4), et le circuit stabilisateur de tension (6) réalise une stabilisation de tension sur un courant continu émis par le moteur auxiliaire (5) vers le convertisseur CC-CC (4) durant une production d'énergie, dans lequel
le second régulateur (512) est configuré pour commander le circuit stabilisateur de tension (6) pour réaliser une stabilisation de tension lorsque la batterie d'alimentation (3) est déconnectée du convertisseur CC-CC (4), et le dispositif de commande de moteur auxiliaire (51) est valide, et le premier régulateur (211) est configuré pour commander le circuit stabilisateur de tension (6) pour réaliser une stabilisation de tension lorsque la batterie d'alimentation (3) est déconnectée du convertisseur CC-CC (4), et le dispositif de commande de moteur auxiliaire (51) tombe en panne.

2. Système d'alimentation (100) d'un véhicule hybride électrique selon la revendication 1, dans lequel à la fois le premier régulateur (211) et le second régulateur (512) sont configurés pour émettre un premier signal de régulation et un second signal de régulation selon un signal de sortie du circuit stabilisateur de tension (6), pour maintenir stable une tension de bus à courant continu émise par l'onduleur, dans lequel le premier signal de régulation est utilisé pour réguler un courant d'axe d du moteur auxiliaire (5), et le second signal de régulation est utilisé pour réguler un courant d'axe q du moteur auxiliaire (5).

3. Système d'alimentation (100) d'un véhicule hybride électrique selon la revendication 2, dans lequel le circuit stabilisateur de tension (6) comprend un premier échantillonneur de tension (61) et un collecteur de tension cible (62), le premier échantillonneur de tension (61) échantillonne la tension de bus à courant continu émise par l'onduleur (511) pour obtenir une première valeur d'échantillon de tension, et émet la première valeur d'échantillon de tension vers le premier régulateur (211) ou le second régulateur (512), et le collecteur de tension cible (62) obtient une tension de référence cible et envoie la tension de référence cible au premier régulateur (211) ou au second régulateur (512), dans lequel
à la fois le premier régulateur (211) et le second régulateur (512) sont configurés pour émettre le premier signal de régulation et le second signal de régulation selon une différence de tension entre la tension de référence cible et la première valeur d'échantillon de tension, et
un signal de sortie du circuit stabilisateur de tension (6) comprend la première valeur d'échantillon de tension et la tension de référence cible.

4. Système d'alimentation (100) d'un véhicule hybride électrique selon la revendication 3, dans lequel le circuit stabilisateur de tension (6) comprend en outre :
un stabilisateur de tension (63), dans lequel le stabilisateur de tension (63) est connecté à une extrémité de sortie de courant continu de l'onduleur (511), le stabilisateur de tension (63) réalise une stabilisation de tension sur la tension de bus à courant continu émise par l'onduleur (511), et une extrémité de sortie du stabilisateur de tension (63) est connectée à une extrémité d'entrée du convertisseur CC-CC (4) ;
un second échantillonneur de tension (64), dans lequel le second échantillonneur de tension (64) échantillonne une tension de sortie du stabilisateur de tension (63) pour obtenir une seconde valeur d'échantillon de tension ; et
un dispositif de commande stabilisateur de tension (65), dans lequel le dispositif de commande stabilisateur de tension (65) est connecté au stabilisateur de tension (63) et au second échantillonneur de tension (64) respectivement, et le dispositif de commande stabilisateur de tension (65) est configuré pour commander la tension de sortie du stabilisateur de tension (63) selon une tension de référence prédéfinie et la seconde valeur d'échantillon de tension pour amener la tension de sortie du stabilisateur de tension (63) à s'inscrire dans un intervalle de tension prédéfini.

5. Système d'alimentation (100) d'un véhicule hybride électrique selon la revendication 3 ou 4, dans lequel à la fois le premier régulateur (211) et le second régulateur (512) comprennent :
une unité de calcul d'erreur, dans lequel l'unité de calcul d'erreur est connectée au premier échantillonneur de tension (61) et au collecteur de tension cible (62) respectivement, et l'unité de calcul d'erreur est configurée pour obtenir la différence de tension entre la tension de référence cible et la première valeur d'échantillon de tension ;
une première unité de régulation PID (b), dans lequel la première unité de régulation PID (b) est connectée à l'unité de calcul d'erreur, et la première unité de régulation PID (b) régule la différence de tension entre la tension de référence cible et la première valeur d'échantillon de tension pour émettre le premier signal de régulation ; et
une seconde unité de régulation PID (c), dans lequel la seconde unité de régulation PID (c) est connectée à l'unité de calcul d'erreur, et la seconde unité de régulation PID (c) régule la différence de tension entre la tension de référence cible et la première valeur d'échantillon de tension pour émettre le second signal de régulation.

6. Système d'alimentation (100) d'un véhicule hybride électrique selon l'une quelconque des revendications 1 à 5, dans lequel le moteur auxiliaire (5) est un moteur BSG.

7. Système d'alimentation (100) d'un véhicule hybride électrique selon l'une quelconque des revendications 1 à 6, dans lequel lorsque le moteur auxiliaire (5) est entraîné par le moteur thermique (1) pour produire de l'énergie, le moteur auxiliaire (5) est configuré pour mettre en oeuvre au moins une d'une charge de la batterie d'alimentation (3), d'une fourniture d'énergie au moteur électrique (2) et d'une fourniture d'énergie au convertisseur CC-CC (4).

8. Système d'alimentation (100) d'un véhicule hybride électrique selon l'une quelconque des revendications 1 à 7, dans lequel lorsque le circuit stabilisateur de tension (6) est disposé sur une ligne de sortie du moteur auxiliaire (5), et le moteur auxiliaire (5) est connecté au moteur électrique (2), à la batterie d'alimentation (3), et au convertisseur CC-CC (4) respectivement par l'intermédiaire du circuit stabilisateur de tension (6).

9. Système d'alimentation (100) d'un véhicule hybride électrique selon l'une quelconque des revendications 1 à 7, dans lequel le circuit stabilisateur de tension (6) est disposé sur une ligne entrante du convertisseur CC-CC (4), et le moteur auxiliaire (5) est connecté au convertisseur CC-CC (4) et à la batterie d'alimentation (3) respectivement.

10. Véhicule hybride électrique, comprenant le système d'alimentation (100) d'un véhicule hybride électrique selon l'une quelconque des revendications 1 à 9.
